# EUROPÄISCHE PATENTSCHRIFT

(11) **EP 2 616 348 B1**
(45) Veröffentlichungstag und Bekanntmachung des Hinweises auf die Patenterteilung: **05.08.2015**
(21) Anmeldenummer: 11748951.8
(22) Anmeldetag: 26.08.2011
(51) Int. Cl.: B65D 5/74

(54) **VERSCHLIESSBARE ÖFFNUNGSVORRICHTUNGEN**
CLOSEABLE OPENING DEVICES
DISPOSITIFS D'OUVERTURE REFERMABLES

(30) Priorität: 15.09.2010 DE 102010040825; 29.04.2011 DE 102011017797
(43) Veröffentlichungstag der Anmeldung: 24.07.2013
(73) Patentinhaber: Robert Bosch GmbH, 70442 Stuttgart (DE)
(72) Erfinder: BARRON, Dan, CH-8200 Schaffhausen (CH)
(86) Internationale Anmeldenummer: PCT/EP2011/064703
(87) Internationale Veröffentlichungsnummer: WO 2012/034836

(56) Entgegenhaltungen:
- WO-A1-02/28728
- WO-A1-95/05996
- WO-A1-2004/000667
- WO-A1-2004/083055
- US-A1- 2009 250 488
- US-B2- 7 207 465

## Beschreibung

Die vorliegende Erfindung betrifft eine verschliessbare Öffnungsvorrichtung für einen aus Kunststofffolie gefertigten Behälter, umfassend einen Unterteil mit zylindrischem Ausguss und einem Flansch zur Befestigung an den Behälter und einer Schraubkappe, die mit dem Unterteil schraubbar verbunden ist, sowie ein zylindrisches Schneidelement mit Aussengewinde, wobei das Schneidelement in axialer Richtung beidseitig offen ist und im Ausguss des Unterteiles in ein Innengewinde läuft, wobei in der Schraubkappe mindestens ein Mitnehmer vorhanden ist, der bei der erstmaligen Abschraubbewegung der Schraubkappe das Schneidelement mit mindestens ein darin angebrachter Mitnehmer schraubenförmig nach unten bewegt, und dass das zylindrische Schneidelement am unteren Rand mindestens einen Schneidzahn aufweist.

### Stand der Technik

Verschliessbare Öffnungsvorrichtungen der eingangs genannten Art sind für Behälter aus laminiertem Folienmaterial seit langem bekannt. Neuerdings kommen immer mehr Behälter auf den Markt, die aus reinen ein- oder mehrlagigen Kunststofffolien gefertigt sind. Solche Behälter werden Schlauchbeutel genannt beziehungsweise meist wird der englischsprachige Begriff Pouches verwendet. Die verschliessbaren Öffnungsvorrichtungen umfassen in der Regel einen direkt auf den Behälter beziehungsweise den Schlauchbeutel befestigten Unterteil und eine auf dem Unterteil lösbar befestigte Schraubkappe zum Verschliessen eines Ausgusses im Unterteil. Zur Befestigung der Öffnungsvorrichtung wird ein Flansch des Unterteiles auf der Kunststofffolie des Schlauchbeutels unlösbar stoffschlüssig durch Ultraschallschweissen befestigt.

Öffnungsvorrichtung der hier genannten Art sind bereits seit vielen Jahren bekannt. Beispielsweise wird diesbezüglich auf die Dokumente US-5147070 A, US-5141133 oder auch WO 2004/000667 verwiesen.

Ferner offenbaren die Dokumente WO 2004/083055, US 2009/250488 und WO 02/28728 ebenso wie WO 95/05996 Öffenungsvorrichtungen gemäss dem Oberbegriff des Patentanspruches 1. Letztlich ist aus der US-7 207 465 auch eine Offnungsvorrichtung bekannt, bei die am Rande des Anspruches eine Ausnehmung geformt ist, in der Fuhrungsmittel am Durchstosses einzugreiten vermögen.

Öffnungsvorrichtungen dieser Art werden in riesigen Stückzahlen gefertigt und auf den Behältern angebracht. Hierbei ging man anfänglich davon aus, dass dieselben Öffnungsvorrichtungen wie sie auf den kartonlaminierten mit Kunststofffolien kombinierten Behältern angebracht wurden auch auf Behälter die aus reinen Kunststofffolien gefertigt sind verwendbar seien. Dies ist zwar im Grundprinzip korrekt, doch ist die Befestigung der Öffnungsvorrichtungen auf reinen Kunststofffolien nur mittels Ultraschallschweissung möglich und entsprechend wurden diesbezüglich Vorkehrungen getroffen, die diese Schweissverbindung verbessern und schneller durchführbar machen.

Zur Verbesserung der Schweissung hat man sich bisher vor allem auf die Ausgestaltung der Energieleitrippen konzentriert. Diesbezügliche Lösungen zeigen beispielsweise die Dokumente JP 200016453 oder auch das Dokument JP 2000344264.

Des weiteren hat man, einerseits um Energie zu sparen und andererseits um die Taktzeiten der Schweissung zu reduzieren, die Wandstärke des Flansches am Unterteil immer dünner gestaltet. Da dies im Bereich des fachmännischen Handelns liegt und dies auch Teil des Know-hows der Hersteller ist findet man diesbezüglich in der Patentliteratur keine Hinweise.

Durch die Dünnwandigkeit des Flansches wird die gesamte verschliessbare Öffnungsvorrichtung flexibler. Dies führt dazu, dass Gefahr besteht, dass sich das Schneidelement relativ zum Ausguss sowohl vor der Erstbenutzung als auch nach der Erstbenutzung ungewollt bewegen kann. Insbesondere nach der Erstbenutzung ergibt sich durch diese Relativbewegung das Problem, dass das Schneidelement sich unter Umständen nach oben oder unten im zylindrischen Ausguss durch die Verformung desselben beziehungsweise durch den auf dem Behälter aufgeschweissten Flansch so deformiert, dass sich das Schneidelement im zylindrischen Ausguss entweder aufwärts oder abwärts bewegt. Bewegt sich das Schneidelement aufwärts, so kommen die Mitnehmer an der Schraubkappe mit den entsprechenden Mitnehmern im Schneidelement unerwünschterweise wieder miteinander in Kontakt und beim abermaligen Schliessen oder Öffnen des Verschlusses wird entsprechend auch das Schneidelement wiederum auf- oder abwärts bewegt. Dies ist unerwünscht, denn wegen dieser abermaligen Bewegungen kann es sein, dass die teilweise aufgeschnittene Folie die praktisch in Form eines Lappens nach unten in den Behälter ragt, vollständig abgetrennt wird und in den Behälter fällt. Da diese Behälter vielfach auch für Lebensmittel, wie Getränke oder Sossen verwendet werden, können dadurch unangenehme Haftpflichtprobleme auftauchen. Ebenso unerwünscht ist es wenn das Schneidelement sich etwas weiter nach unten bewegt und danach nicht mehr im Ausguss gehalten ist und somit in den Behälter fällt. Hierdurch wird sich zwar kaum eine Gefährdung des Benutzers ergeben, sondern das Schneidelement kann bei der weiteren Benutzung vor den Ausguss zu liegen kommen und dessen Funktion so beeinträchtigen, dass der Ausgussstrahl abgelenkt wird, was entsprechend zu Verschmutzungen führen kann.

Es ist daher die Aufgabe der vorliegenden Erfindung eine verschliessbare Öffnungsvorrichtung der eingangs genannten Art derart zu Verbessern, dass die vorgenannten Probleme nicht mehr auftreten.

Diese Aufgabe löst eine verschliessbare Öffnungsvorrichtung gemäss Anspruch 1.

Weitere vorteilhafte Ausgestaltungsformen des Erfindungsgegenstandes gehen aus den abhängigen Patentansprüchen hervor und deren Bedeutung und Wirkungsweise wird in der nachfolgenden Beschreibung mit Bezug auf die anliegenden Zeichnungen erläutert. Es zeigt:

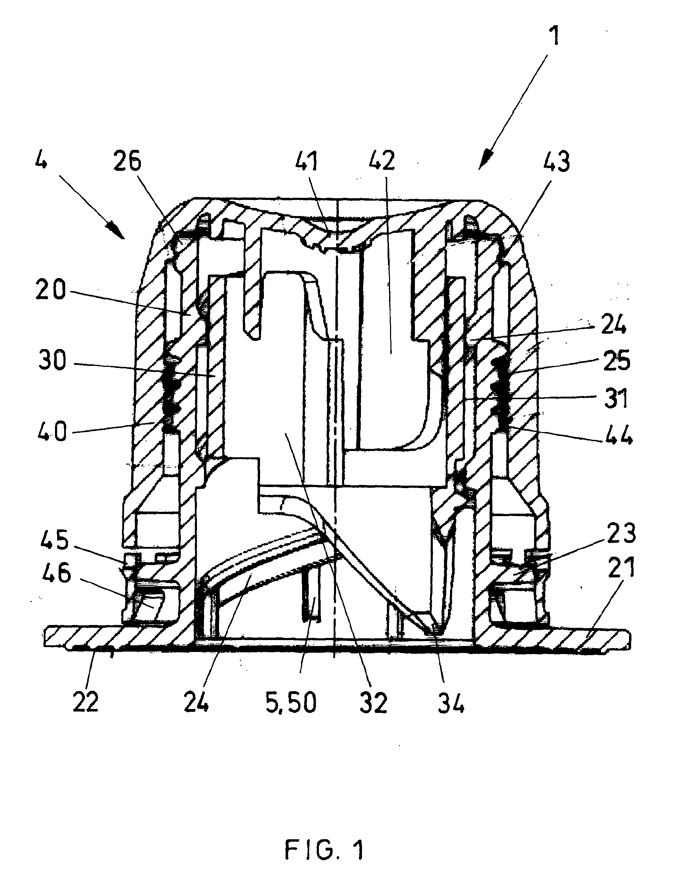

- Figur 1: die erfindungsgemässe verschliessbare Öffnungsvorrichtung im zusammengebauten Zustand vor der Erstöffnung im diametralen Vertikalschnitt und
- Figur 2: den Unterteil der Öffnungsvorrichtung für sich allein in perspektivischer Ansicht mit Blick auf die Unterseite und
- Figur 3: das zylindrische Schneidelement für sich allein wiederum in perspektivischer Seitenansicht leicht von unten gesehen.

Die erfindungsgemässe verschliessbare Öffnungsvorrichtung ist insgesamt mit 1 bezeichnet. Sie besteht aus drei Einzelteilen, nämlich einen Unterteil 2, einen darin schraubbeweglich geführten Schneidelement 3 und einer darauf aufsetzbaren und die Öffnungsvorrichtung verschliessenden Schraubkappe 4.

Der Unterteil 2 besteht aus einem zylindrischen Rohrabschnitt der den Ausguss 20 bildet und einem endständig mit dem unteren Rand des Ausgusses 20 fluchtend nach aussen gerichtet angeordneten Flansch 21. Auf der Unterseite des Flansche 21 sind mehrere umlaufende konzentrisch zueinander verlaufende Energieleitrippen 22 angeformt. Ferner besitzt der Ausguss 20 einen nach aussen ragenden parallel zum Flansch 21 umlaufenden Kragen 23. Der Ausguss 20 ist mit einem Innengewinde 24 versehen. Auf der Aussenseite ist der Ausguss 20 mit einem Aussengewinde 25 versehen. Während das Aussengewinde 25 als Feingewinde gestaltet ist und eine geringe Steigung aufweist, ist das Innengewinde 24 als Grobgewinde mit grosser Steigung ausgeformt. Ferner ist der obere Rand des zylindrischen Ausgusses 20 mit einer umlaufenden Dichtwulst 26 ausgestaltet.

Wie bereits erwähnt ist im Ausguss 20 das Schneidelement 3 schraubbeweglich gelagert. Das Schneidelement 3 besteht aus einem zylindrischen Rohrabschnitt 30, welches beidseitig offen ist. Auf der Aussenseite des zylindrischen Rohrabschnittes 30 ist ein Aussengewinde 31 angeformt. Dieses Aussengewinde 31 kämmt mit dem Innengewinde 24 des Ausgusses 20. An der Innenwand des zylindrischen Rohrabschnittes 30 ist ein nach innen ragender Mitnehmer 32 angeformt. Der zylindrische Rohrabschnitt 30 hat eine untere Stirnseite 33 und daran ist mindestens ein fluchtend mit der Wand des zylindrischen Rohrabschnittes 30 nach unten gerichteter Schneidzahn 34 angeformt. Die Ausgestaltung des Schneidzahnes, beziehungsweise falls mehrere Schneidzähne vorhanden sind, der Schneidzähne ist dabei unwesentlich. Im montierten Zustand vor der Erstbenutzung liegt der mindestens eine Schneidzahn 34 oberhalb der Flanschunterseite. Damit ist sichergestellt, dass die Folie des Schlauchbeutels vor der Erstöffnung mit dem Schneidzahn 34 nicht in Berührung kommt.

Auf den Unterteil 2 ist die Schraubkappe 4 aufgesetzt. Die Schraubkappe 4 besitzt eine zylindrische Mantelwand 40 und eine Deckfläche 41. An der Deckfläche 41 ist mindestens ein Mitnehmer 42 nach unten ragend angeformt. Auf der Innenseite der Schraubkappe 4 sind mehrere mit dem Ausguss 20 zusammenwirkende Dichtungen 43 vorgesehen. Da diese für die vorliegende Erfindung nicht von Bedeutung sind, wird auf deren Ausgestaltung und Wirkung hier nicht weiter eingegangen. Die Schraubkappe 4 besitzt ein Innengewinde 44. Dieses Innengewinde 44 ist als Feingewinde gestaltet, gleich dem Aussengewinde 25 des Unterteiles 2. Unten an der Mantelwand 40 ist ein Garantieband 45 angeformt, welches sich mit nach innen gerichteten Nocken 46 unter dem umlaufenden Kragen 23 des Unterteiles 2 formschlüssig hält. Das Garantieband 45 ist mit hier nicht dargestellten Sollbruchstellenbrücken an der Mantelwand 40 angeformt. Letztlich erkennt man auf der Innenseite des Unterteiles 2 einen vertikal nach unten gerichteten Anschlagsbalken 50 als eine mögliche, bevorzugte Ausführungsform einer Rotationssicherung 5. Diese Rotationssicherung 5 kommt erst zum Einsatz, wenn bei der Erstbenutzung die Schraubkappe 4 vollständig abgedreht worden ist.

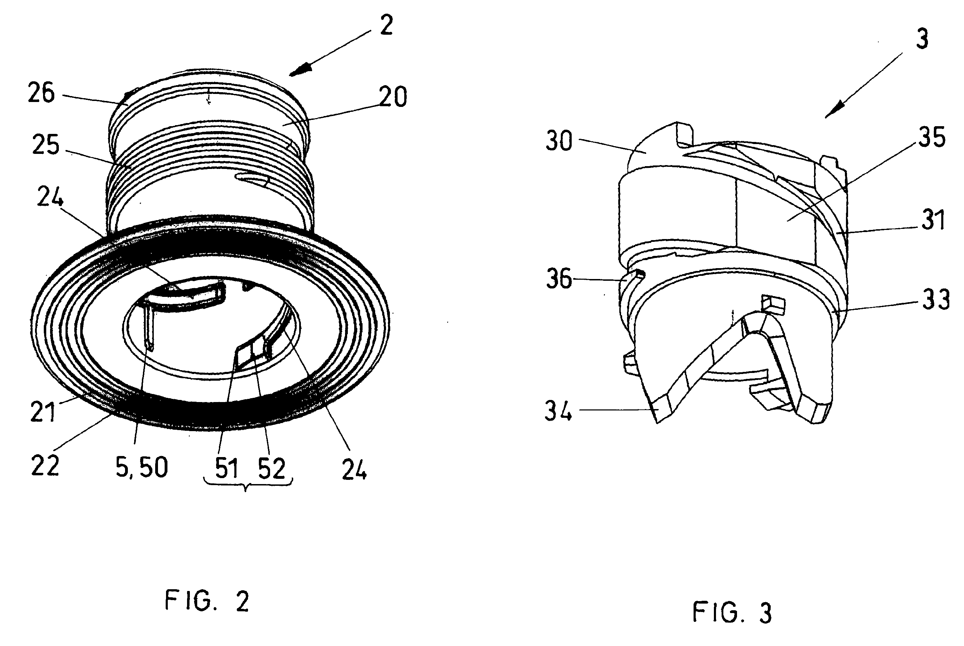

Bei der Erstbenutzung wird die Schraubkappe 4 abgeschraubt wobei das Garantieband 45 von der Mantelwand 40 der Schraubkappe getrennt wird. Gleichzeitig wirkt der Mitnehmer 42 auf der Unterseite der Deckfläche 41 der Schraubkappe 4 auf den Mitnehmer 32 auf der Innenseite des zylindrischen Rohrabschnittes 30 des Schneidelementes 3. Während somit die Schraubkappe 4 nach oben geschraubt wird, wird das Schneidelement 3 in eine gleichsinnige, aber abwärts gerichtete Schraubbewegung versetzt. Hierbei schneidet der mindestens eine Schneidzahn 34 die Folie des Behälters auf. Erst im vollständig aufgedrehten Zustand wirkt die Rotationssicherung 5. Zur weiteren Erklärung wird nunmehr auf die Figuren 2 und 3 verwiesen.

In der Figur 2 erkennt man den Unterteil 2 für sich allein und die einzelnen zuvor beschriebenen Merkmale dieses Unterteiles 2 sind mit gleichen Bezugszahlen versehen. Der Unterteil 2 besteht wie bereits erwähnt aus dem zylindrischen Ausguss 20 mit einem endständigen Flansch 21. Auf der Aussenseite des Ausgusses 20 erkennt man einerseits das Aussengewinde 25 und andererseits die Dichtwulst 26. Hier interessiert aber insbesondere das durch die perspektivische Sicht erkennbare und von unten her im Innern des Ausgusses 20 angebrachte Innengewinde 24. Dieses Innengewinde 24 besitzt ein Auslaufende 51 an dem eine Anschlagnocken 52 angeformt ist. Diese Anschlagnocke 52 wirkt mit dem Aussengewinne 31 des Schneidelementes 3 zusammen, welches in der Figur 3 für sich allein dargestellt ist. Das Schneidelement 3 besteht aus dem zylindrischen Rohrabschnitt 30 in dem das Aussengewinde 31 eingeformt ist, sowie einer Stirnseite 33 am unteren Ende des Rohrabschnittes 30, an dem mindestens ein Schneidzahn 34 angeformt ist. Das Aussengewinde 31 besitzt ein Auslaufende 36 und dieses Auslaufende stösst im vollständig eingeschraubten Zustand nach der Erstöffnung an den bereits erwähnten Nocken 52 der Rotationssicherung 5. Die bislang beschriebene Rotationssicherung wird hier als zweite Rotationssicherung bezeichnet. Eine erste Rotationssicherung 5 ist durch eine rotationshemmende Rippe 50 gebildet, die am unteren Bereich des Innengewindes 24 parallel zur Rotationsachse des Ausgusses 20 an dessen Mantelwand innen angeformt ist. Diese Rippe 50 wirkt mit einer Ausnehmung 35, die hier in der Form einer Abplattung gestaltet ist, zusammen. Bei einer unbeabsichtigten Relativbewegung des Schneidelementes 3 im Unterteil 2 müsste jene Kraft überwunden werden, die erforderlich ist, dass die Rippe 50 aus der Ausnehmung 35 gedreht wird. Hierzu muss praktisch die Höhe der Abplattung überwunden werden. Während diese Kraft beabsichtigt durch die angelegte Rotationsbewegung des Benutzers zwar merkbar aber doch mit geringem Aufwand überwindbar ist, genügt diese hemmende Wirkung, dass das Schneidelement nicht selbsttätig durch geringfügige Relativbewegungen aus der gesicherten Position gelangt.

Die Rotationssicherung 5 in der Form der Rippe 50 kann für sich allein genügen. Die Rippe 50, wenn sie mit der Abplattung 35 zusammenwirkt, besitzt eine hemmende Wirkung in beide Rotationsrichtungen. Dies bedeutet, dass wenn die Rippe 50 und die Abplattung 35 in Eingriff stehen, ein Kraftschluss gebildet ist, der in jede Drehrichtung erst überwunden werden muss. Aus diesem Grunde kann die Rotationssicherung 5 in der Kombination bestehend aus der Rippe 50 und der Abplattung 35 für sich allein bereits hinreichend wirken. Insbesondere da die Mitnehmer in der untersten Position normalerweise nicht mehr im Eingriff sind, kann auch ohne eine solche Rotationssicherung die leichte Berührung der beiden Mitnehmer zu einer Rückwärtsbewegung führen beim abermaligen Abschrauben der Schraubkappe 4. Durch den vorhanden Kraftschluss ist jedoch die erforderliche Kraft zu gross, so dass die Spitze des Mitnehmers 42 der Schraubkappe über das obere Ende des Mitnehmers 32 im Schneidelement springt. Trotzdem ist es sinnvoll, neben dieser Rippe 50, die hier als erste Rotationssicherung bezeichnet ist, zusätzlich das zweite Rotationselement in Form des Anschlagnockens 52 am Auslaufende 51 des Innengewindes 24 vorzusehen. Dies ergibt eine formschlüssige Endposition, womit definitiv sichergestellt wird, dass das Schneidelement 3 nicht vollständig aus dem Unterteil 2 herausgeschraubt werden kann. Gleichzeitig wirkt in dieser Position aber auch die erste Rotationssicherung 5, 50 im Bereich der Abplattung 35, und somit besteht in dieser Lage sowohl eine kraftschlüssige als auch eine formschlüssige Sicherung des Schneidelementes 3 im Ausguss 20 des Unterteiles 2. Durch die Kombination der ersten und der zweiten Rotationssicherung ergibt sich daher eine optimale Lösung für das vorgenannte Problem. Obwohl die erste Rotationssicherung bereits die hier gestellte Aufgabe löst, wird man folglich bevorzugterweise sowohl die erste als auch die zweite Rotationssicherung vorsehen.

Die Ausnehmung 35 kann statt in der Form einer Abplattung auch in Form einer V-förmigen parallel zur Rotationsachse des Schneidelementes 3 verlaufende Nut oder Kerbe sein. Hierdurch ergibt sich dann auch für die erste Rotationssicherung 5 eine formschlüssige Sicherung.

## Patentansprüche

1. Verschliessbare Öffnungsvorrichtung (1) für einen aus Kunststofffolie gefertigten Behälter, der umfassend einen Unterteil (2) mit zylindrischem Ausguss (20) und einem Flansch (21) zur Befestigung an den Behälter und einer Schraubkappe (4), die mit dem Unterteil (2) schraubbar verbunden ist, sowie ein zylindrisches Schneidelement (3) mit Aussengewinde (31), wobei das Schneidelement (3) in axialer Richtung beidseitig offen ist und im Ausguss (20) des Unterteiles (2) in ein Innengewinde (20) läuft, wobei in der Schraubkappe (4) mindestens ein Mitnehmer (42) vorhanden ist, der bei der erstmaligen Abschraubbewegung der Schraubkappe (4) das Schneidelement (3) mit mindestens einen darin angebrachten Mitnehmer (32) schraubenförmig nach unten bewegt, und dass das zylindrische Schneidelement (3) am unteren Rand mindestens einen Schneidzahn (34) aufweist, **dadurch gekennzeichnet, dass** der Ausguss (20) mindestens eine erste Rotationssicherung (5, 50) aufweist, die das Schneidelement (3) innerhalb des Ausgusses (20) in der Position sichert, in der sich das Schneidelement (3) unmittelbar nach erstmaligem Abschrauben der Schraubkappe (4) vom Unterteil (2) befindet, womit die Relativbewegung des Schneidelementes (3) zum Unterteil verhindert ist, wobei die erste Rotationssicherung (5, 50) eine zum Zentrum des Ausgusses (20) hin gerichtete Erhebung (50) ist, die mit einer Ausnehmung (35) am Schneideelement (3) form- und/oder kraftschlüssig zusammenwirkt.

2. Verschliessbare Öffnungsvorrichtung (1) nach Anspruch 1, **dadurch gekennzeichnet, dass** die erste Rotationssicherung (5) eine parallel zur Zentrumsachse des Ausgusses (20) verlaufende, unterhalb des Innengewindes (25) an der Innenwand des Ausgusses (20) angeordnete Rippe (50) ist.

3. Verschliessbare Öffnungsvorrichtung (1) nach Anspruch 1, **dadurch gekennzeichnet, dass** die Ausnehmung (35) am Schneidelement (3), die mit der ersten Rotationssicherung zusammenwirkt, eine Abplattung ist.

4. Verschliessbare Öffnungsvorrichtung (1) nach Anspruch 1, **dadurch gekennzeichnet, dass** zusätzlich eine zweite Rotationssicherung (5) eine am Auslaufende (51) des Innengewindes angeformter Anschlagsnocken (52) ist, an dem das Einlaufende (36) des Aussengewindes (31) des Schneidelementes (3) anschlägt.

## Claims

1. Closable opening device (1) for a container produced from plastics sheet material, comprising a lower part (2) with a cylindrical spout (20) and with a flange (21), for fastening on the container, and also comprising a screw cap (4) which is connected for screwing action to the lower part (2), and further comprising a cylindrical cutting element (3) with an external thread (31), wherein the cutting element (3) is open at either end, as seen in the axial direction, and runs into an internal thread (24) in the spout (20) of the lower part (2), wherein at least one driver (42) is present in the screw cap (4) and, when the screw cap (4) is unscrewed for the first time, this driver moves the cutting element (3), with at least one driver (32) fitted therein, helically downwards, and wherein the cylindrical cutting element (3) has at least one cutting tooth (34) on the lower periphery, **characterized in that** the spout (20) has at least a first rotation-prevention means (5, 50), which secures the cutting element (3) within the spout (20) in the position in which the cutting element (3) is located immediately after the screw cap (4) has been unscrewed from the lower part (2) for the first time, the movement of the cutting element (3) relative to the lower part being prevented as a result, wherein the first rotation-prevention means (5, 50) is an elevation (50), which is directed towards the centre of the spout (20) and interacts in a form-fitting and/or force-fitting manner with a recess (35) on the cutting element (3).

2. Closable opening device (1) according to Claim 1, **characterized in that** the first rotation-prevention means (5) is a rib (50), which runs parallel to the centre axis of the spout (20) and is arranged beneath the internal thread (24) on the inner wall of the spout (20) .

3. Closable opening device (1) according to Claim 1, **characterized in that** the recess (35) on the cutting element (3), said recess interacting with first rotation-prevention means, is a flattened portion.

4. Closable opening device (1) according to Claim 1, **characterized in that**, in addition, a second rotation-prevention means (5) is a stop protuberance (52), which is formed at the exit end (51) of the internal thread and against which the introduction end (36) of the external thread (31) of the cutting element (3) strikes.

## Revendications

1. Dispositif d'ouverture refermable (1) pour un réservoir fabriqué en une feuille plastique, comprenant une partie inférieure (2) avec un embout d'écoulement cylindrique (20) et une bride (21) pour la fixation au réservoir et avec un capuchon à visser (4), qui peut être assemblé par vissage à la partie inférieure (2), ainsi qu'un élément de coupe (3) avec un filet extérieur (31), dans lequel l'élément de coupe (3) est ouvert sur les deux côtés en direction axiale et il s'étend dans un filet intérieur (24) dans l'embout d'écoulement (20) de la partie inférieure (2), dans lequel il se trouve dans le capuchon à visser (4) au moins un entraîneur (42) qui, lors du premier mouvement de dévissage du capuchon à visser (4), déplace vers le bas en mouvement hélicoïdal l'élément de coupe (3) avec au moins un entraîneur (32) placé dans celui-ci, et l'élément de coupe cylindrique (3) présentant au moins une dent de coupe (34) sur le bord inférieur, **caractérisé en ce que** l'embout d'écoulement (20) présente au moins un premier blocage de rotation (5, 50), qui bloque l'élément de coupe (3) à l'intérieur de l'embout d'écoulement (20) dans la position dans laquelle l'élément de coupe (3) se trouve immédiatement après le premier dévissage du capuchon à visser (4) de la partie inférieure (2), le mouvement relatif de l'élément de coupe (3) par rapport à la partie inférieure étant ainsi empêché, dans lequel le premier blocage de rotation (5, 50) est une protubérance (50) dirigée vers le centre de l'embout d'écoulement (20), qui coopère par emboîtement et/ou par adhérence avec un creux (35) sur l'élément de coupe (3).

2. Dispositif d'ouverture refermable (1) selon la revendication 1, **caractérisé en ce que** le premier blocage de rotation (5) est une nervure (50) orientée parallèlement à l'axe central de l'embout d'écoulement (20) et disposée en dessous du filet intérieur (24) sur la paroi intérieure de l'embout d'écoulement (20).

3. Dispositif d'ouverture refermable (1) selon la revendication 1, **caractérisé en ce que** le creux (35) sur l'élément de coupe (3), qui coopère avec le premier blocage de rotation, est un méplat.

4. Dispositif d'ouverture refermable (1) selon la revendication 1, **caractérisé en ce qu'**en plus un deuxième blocage de rotation (5) est une came de butée (52) formée à l'extrémité de sortie (51) du filet intérieur, sur laquelle vient buter l'extrémité d'entrée (36) du filet extérieur (31) de l'élément de coupe (3).
